# EUROPEAN PATENT SPECIFICATION

(11) **EP 1 893 692 B1**
(45) Date of publication and mention of the grant of the patent: **07.05.2014**
(21) Application number: 06747249.8
(22) Date of filing: 02.06.2006
(51) Int. Cl.: C08L 83/04, C08K 3/00, C08K 3/26

(54) **SILICONE RUBBER COMPOSITION**
SILIKONGUMMIZUSAMMENSETZUNG
COMPOSITION DE CAOUTCHOUC DE SILICONE

(30) Priority: 02.06.2005 JP 2005162076
(43) Date of publication of application: 05.03.2008
(73) Proprietor: Dow Corning Toray Co., Ltd., Tokyo, 100-0004 (JP)
(72) Inventor: TASAKI, Tomoko, c/o Dow Corning Toray Co., Ltd., Ichihara-shi, Chiba 2990108 (JP); TAKUMAN, Osamu, c/o Dow Corning Toray Co., Ltd., Ichihara-shi, Chiba 2990108 (JP)
(74) Representative: Gillard, Richard Edward
(86) International application number: PCT/JP2006/311573
(87) International publication number: WO 2006/129887

(56) References cited:
- US-A1- 2002 037 963

## Description

### Technical Field ,

The present invention relates to a silicone rubber composition that contains a calcium carbonate powder and is cured by means of a hydrosilylation reaction.

### Background Art

Since silicone rubber compositions that contain a calcium carbonate powder and are cured by a hydrosilylation reaction also contain an alkali component as an impurity of the aforementioned calcium carbonate powder, a problem arises during storage of such compositions because they evolve gaseous hydrogen as a result of a reaction with the organopolysiloxane that has silicon-bonded hydrogen atoms and is used in the composition as a curing agent. It was proposed to solve this problem by using a silicone rubber composition (refer to Japanese Laid-Open (Unexamined) Patent Application Number Hei 10-60281 (60,281/1998)) that comprises a diorganopolysiloxane having at least two alkenyl groups in one molecule, an organopolysiloxane having at least two silicon-bonded hydrogen atoms in one molecule, a platinum metal-type catalyst, and a calcium carbonate powder surface-treated with a partially hydrolyzed condensate of tetraalkoxysilane, or by using silicone rubber compositions (refer to Japanese Laid-Open (Unexamined) Patent Application Numbers 2002-38016 (38,016/2002) and 2002-285130 (285,130/2002)) that comprise a diorganopolysiloxane having at least two alkenyl groups in one molecule, a calcium carbonate powder substantially surface-treated with diorganopolysiloxane, an organopolysiloxane having at least two silicon-bonded hydrogen atoms in one molecule, and a platinum metal-type catalyst. Furthermore, it is also known that in order to improve physical properties and especially the elongation characteristics of the silicone rubber obtained from the above compositions, the curing agent of such compositions may be consisted of a dimethylpolysiloxane capped at both molecular terminals with dimethylhydrogensiloxy groups and a copolymer of methylhydrogensiloxane and dimethylsiloxane that is capped at both molecular terminals with trimethylsiloxy groups.

However, the above-mentioned compositions demonstrate insufficient adhesion to silicone rubber. Furthermore, when the mole ratio of silicon-bonded hydrogen atoms to alkenyl groups contained in the composition is low (i.e., when the absolute weight of the silicon-bonded hydrogen atoms is small), the composition becomes unstable during long storage, and its adhesive and physical characteristics further deteriorate.

It is an object of the present invention to provide a silicone composition that contains a calcium carbonate powder and is cured by a hydrosilylation reaction, and more particularly, to provide a silicone rubber composition that can produce a silicone rubber with initially designed physical properties and adhesion to silicone rubber even after long storage.

### Disclosure of Invention

The silicone rubber composition of the present invention comprises:
(A) 100 parts by mass of a diorganopolysiloxane having with an average of at least two alkenyl groups in one molecule;
(B) an organopolysiloxane having with an average of at least two silicon-bonded hydrogen atoms {wherein the mole ratio of silicon-bonded hydrogen atoms of this component to alkenyl groups of component (A) is in the range of 0.01 to 20};
(C) 1 to 200 parts by mass of a precipitated or light calcium carbonate powder surface-treated with a fatty acid or a resin acid;
(D) 0.01 to 20 parts by mass of a diorganopolysiloxane capped at both molecular terminals with silanol groups which are free of alkenyl groups and silicon-bonded hydrogen atoms; and
(E) a hydrosilylation reaction catalyst (used in the amount required for curing the present composition).

### Effects of Invention

The silicone rubber composition of the present invention, which contains a calcium carbonate powder and is cured by a hydrosilylation reaction, can produce a silicone rubber with the initially designed physical characteristics and adhesion to silicone rubber even after long storage.

### Detailed Description of the Invention

The silicone rubber composition of the present invention will be described in detail.

Component (A), which is a diorganopolysiloxane having with an average of at least two alkenyl groups in one molecule, is one of the main components of the composition. Alkenyl groups of component (A) may be exemplified by vinyl, allyl, butenyl, pentenyl, hexenyl, and heptenyl groups, preferably vinyl groups. Silicon-bonded organic groups other than alkenyl groups in component (A) may be represented by methyl, ethyl, propyl, butyl, pentyl, hexyl, or similar alkyl groups; phenyl, tolyl, xylyl, or similar aryl groups; 3-chloropropyl, 3,3,3-trifluoropropyl, or similar halogenated alkyl groups, preferably methyl or phenyl groups. Component (A) should have essentially a linear molecular structure, but within the limits not in contradiction with the object of the invention, a partially branched molecular structure is allowable. There are no special limitations with regard to the viscosity of component (A) at 25°C, but it is recommended to have this viscosity in the range of 100 to 1,000,000 mPa·s, preferably within the range of 100 to 500,000 mPa·s.

The following are specific examples of diorganopolysiloxanes suitable for use as component (A): dimethylpolysiloxane capped at both molecular terminals with dimethylvinylsiloxy groups; a copolymer of methylvinylsiloxane and dimethylsiloxane capped at both molecular terminals with dimethylvinylsiloxy groups; a copolymer of methylvinylsiloxane and dimethylsiloxane capped at both molecular terminals with trimethylsiloxy groups; diorganopolysiloxanes wherein a part or all of the methyl groups thereof are substituted by ethyl groups, propyl groups, or similar alkyl groups, phenyl groups, tolyl groups, or similar aryl groups, 3,3,3-trifluoropropyl groups, or similar halogenated alkyl groups; diorganopolysiloxanes wherein a part or all of the vinyl groups thereof are substituted by allyl groups, hexenyl groups, or similar alkenyl groups; or mixtures of two or more of the aforementioned diorganopolysiloxanes.

Component (B), which is an organopolysiloxane having with an average of at least two silicon-bonded hydrogen atoms in one molecules, is a curing agent of the composition. There are no restrictions with regard to the molecular structure of component (B), and this component may have a linear, branched, cyclic or a three-dimensional resinous structure. Silicon-bonded organic groups of component (B) may be represented by methyl, ethyl, propyl, butyl, pentyl, hexyl, or similar alkyl groups; phenyl, tolyl, xylyl, or similar aryl groups; benzyl, phenethyl, or similar aralkyl groups; 3-chloropropyl, 3,3,3-trifluoropropyl, or similar halogenated alkyl groups. Of these, most preferable are methyl groups. There are no restrictions with regard to viscosity of component (B) at 25°C; and the viscosity may be within the range of 1 to 1,000,000 mPa·s.

The following are specific examples of organopolysiloxanes suitable for use as component (B): a dimethylpolysiloxane having both molecular terminals capped with dimethylhydrogensiloxy groups; a copolymer of methylphenylsiloxane and dimethylsiloxane capped at both molecular terminals with dimethylhydrogensiloxy groups; a copolymer of methylhydrogensiloxane and dimethylsiloxane capped at both molecular terminals with trimethylsiloxy groups; a copolymer of methylhydrogensiloxane, methylphenylsiloxane, and dimethylsiloxane capped at both molecular terminals with trimethylsiloxy groups; a copolymer of methylhydrogensiloxane and dimethylsiloxane capped at both molecular terminals with dimethylhydrogensiloxy groups; or a mixture of two or more of the aforementioned organopolysiloxanes.

Component (B) is used in such an amount that the mole ratio of siliconbonded hydrogen atoms contained in this component to alkenyl groups contained in component (A) is in the range of 0.01 to 20, preferably in the range of 0.1 to 10, and even more preferably, in the range of 0.1 to 5. If component (B) is used in an amount less than the lower recommended limit of the above range, the obtained silicone rubber composition will show a tendency to insufficient curing, and if, on the other hand, the added amount of component (B) exceeds the upper limit of the recommended range, the obtained silicone rubber will show impairment of its physical characteristics.

Component (C), which is a calcium carbonate powder, is used for improving adhesion to silicone rubber. There are no special restrictions with regard to the BET-specific surface area of component (C), but it is recommended to have this characteristic in the range of 5 to 50 m²/g, preferably in the range of 10 to 50 m²/g. The calcium carbonate powder of component (C) is precipitated or light calcium carbonate powder, surface-treated with fatty acids or resin acids.

Component (C) is used in an amount of 1 to 200 parts by mass, preferably 5 to 200 parts by mass, and even more preferably, 10 to 100 parts by mass per 100 parts by mass of component (A). If component (C) is used in an amount less than the lower recommended limit of the above range, the obtained silicone rubber composition will show a tendency to decrease in adhesion to silicone rubber, and if, on the other hand, the added amount of component (C) exceeds the upper recommended limit of the above range, it would be difficult to prepare a uniform silicone rubber composition.

Component (D), which is a diorganopolysiloxane capped at both molecular terminals with silanol groups that are free of alkenyl groups and silicon-bonded hydrogen atoms, is used in the composition for improving long-term storage stability. Silicon-bonded organic groups of component (D) may be represented by methyl, ethyl, propyl, butyl, pentyl, hexyl, or similar alkyl groups; phenyl, tolyl, xylyl, or similar aryl groups; 3-chloropropyl, 3,3,3-trifluoropropyl, or similar halogenated alkyl groups. Most preferable of these are methyl and phenyl groups. In most cases, component (D) has a linear molecular structure, but in the limits that do not depart from the scope of the claims, this component may have a partially branched molecular structure as well. Also there are no restrictions with regard to the viscosity of component (D) at 25°C, which may be in the range of 1 to 1,000 mPa·s, preferably in the range of 5 to 200 mPa·s.

The following are specific examples of the diorganopolysiloxanes suitable for use as component (D): a dimethylpolysiloxane having both molecular terminals capped with silanol groups; a methylphenylpolysiloxane having both molecular terminals capped with silanol groups; a copolymer of diphenylsiloxane and dimethylsiloxane having both molecular terminals capped with silanol groups; and a copolymer of methylphenylsiloxane and dimethylsiloxane capped at both molecular terminals with silanol groups.

Component (D) can be used in an amount of 0.01 to 20 parts by mass, preferably 0.1 to 10 parts by mass per 100 parts by mass of component (A). If component (D) is used in an amount less than the lower recommended limit of the above range, the obtained silicone rubber composition will show a tendency to decrease in long-term-storage stability. If, on the other hand, the content of component (D) exceeds the upper recommended limit of the above range, the obtained silicone rubber will have impaired physical characteristics.

Component (E), which is a hydrosilylation reaction catalyst, is used to accelerate curing of the composition. The hydrosilylation reaction catalyst may be represented by a platinum metal-type catalyst, rhodium-type catalyst, iridium-type catalyst, palladium-type catalyst, or ruthenium-type catalyst, of which the platinum metal-type catalyst is preferred. More specifically, component (E) can be exemplified by a fine platinum powder, platinum black, chloroplatinic acid, platinum tetrachloride, and alcohol-modified chloroplatinic acid, platinum-olefin complex, platinum-alkeriylsiloxane complex, platinum-carbonyl complex, as well as powdered methylmethacrylate resin, polycarbonate resin, polystyrene resin, silicone resin, or similar thermoplastic organic resins that contain a platinum catalyst; rhodium-type catalysts represented by the following formulae: [Rh(O₂CCH₃)₂]₂, Rh(O₂CCH₃)₃, Rh₂(C₈H₁₅O₂)₄, Rh(C₅H₇O₂)₃, Rh(C₅H₇O₂) (CO)₂, Rh(CO)[Ph₃P](C₅H₇O₂), RhX₃[(R)₂S]₃, (R²₃P)₂RH(CO)X, (R²₃P)₂Rh(CO)H, Rh₂X₂Y₄, HₐRh_{b}(En)_{c}Cld, or Rh[O(CO)R]₃₋ₙ(OH)ₙ (where X is hydrogen, chlorine, bromine, or iodine; Y is a methyl group, ethyl group, or a similar alkyl group; CO, C₈H₁₄ or 0.5C₈H₁₂; R is an alkyl group, cycloalkyl group, or aryl group; R² is an alkyl group, aryl group, alkyloxy group, or an aryloxy group; En is an olefin; "a" is 0 or 1; "b" is 1 or 2; "c" is an integer from 1 to 4; "d" is 2, 3, or 4; and "n" is 0 or 1); iridium-type catalysts represented by the following formulae:
Ir(OOCCH₃)₃, Ir(C₅H₇O₂)₃; [Ir(Z)(En)₂]₂, or [Ir(Z)(Dien)]₂ (where Z is chlorine, bromine, iodine, or an alkoxy group; En is an olefin; and Dien is a cyclooctadiene).

There are no special restrictions with regard to the amount of component (E) provided that this amount ensures proper curing of the composition. In general, metal atom contained in this component can be used in an amount of 0.01 to 1,000 parts by mass, preferably 0.1 to 500 parts by mass per 1,000,000 parts by mass of component (A).

In order to improve mechanical strength of the silicone rubber obtained by curing the composition of the invention, the composition may be further combined with a silica powder (F) which may be represented by fumed silica, precipitated silica, baked silica, crushed quartz, or the aforementioned powders surface-treated with organoalkoxysilanes, organohalosilanes, organosilazanes, or similar organic silicon compounds. In order to improve the mechanical strength in the silicone rubber obtained by curing the composition, it is recommended to use component (F) as a silica powder that has a BET-specific surface area exceeding 50 m²/g.

Component (F) can be used in arbitrary amounts, but in order to improve mechanical strength of the obtained silicone rubber, it is recommended to use component (F) in an amount of 1 to 100 parts by mass, preferably 1 to 50 parts by mass per 100 parts by mass of component (A).

If necessary, the composition of the present invention may be combined with some other arbitrary components such as wollastonite; talc; aluminite; calcium sulfate; barium sulfate; magnesium carbonate; kaolin, or a similar clay; aluminum hydroxide; magnesium hydroxide; graphite; barite; malachite, or a similar copper carbonate; zaratite, or a similar nickel carbonate; witherite, or a similar barium carbonate; strontianite or a similar strontium carbonate; forsterite, sillimanite, mullite, pyrophyllite, kaolinite, vermiculite, or a similar silicate; diatomaceous earth; a non-reinforcing filler such as silver, nickel, or another metal powder; the aforementioned fillers surface-treated with organic silicon compounds; red iron oxide, titanium oxide, or similar pigments, etc.

An agent that can be added to the composition of the invention for imparting adhesive properties with improved adhesion to silicone rubber can be represented by the following compounds: methylvinyldimethoxysilane, ethylvinyldimethoxysilane, methylvinyldiethoxysilane, ethylvinyldiethoxysilane, or a similar alkylalkenyldialkoxysilane; methylvinyldioximesilane, ethylvinyldioximesilane, or a similar alkylalkenyldioximesilane; methylvinyldiacetoxysilane, ethylvinyldiacetoxysilane, or a similar alkylalkenyldiacetoxysilane; methylvinyldihydroxysilane, ethylvinyldihydroxysilane, or a similar alkenylalkyldihydroxysilane; methyltrimethoxysilane, vinyltrimethoxysilane, allyltrimethoxysilane, 3-methacryloxypropyltrimethoxysilane, 3-glycidoxypropyltrimethoxysilane, 3-aminopropyltrimethoxysilane, N-(2-aminoethyl)-3-aminopropyltrimethoxysilane, bis (trimethoxysilyl) propane, bis (trimethoxysilyl) hexane, or a similar organotrialkoxysilane; triallylisocyanurate; diallyl (3-trimethoxysilyl) isocynurate, tris (3-trimethoxysilylpropyl) isocyanurate; tris (3-triethoxysilylpropyl) isocyanurate; tris (3-tripropoxysilylpropyl) isocynurate, or a similar isocyanurate compound; tetraethyltitanate, tetrapropyltitanate, tetrabutyltitanate, tetra (2-ethylhexyl) titanate, titanium ethyl acetonate, titanium acetyl acetonate, or a similar titanium compound; ethylacetoacetate aluminum diisopropylate, aluminum tris (ethylacetoacetate), alkylacetoacetate aluminum diisopropylate, aluminum tris (acetylacetonate), aluminum monoacetylacetonate bis (ethylacetonate), or a similar aluminum compound; zirconium acetylacetonate, zirconium butoxyacetylacetonate, zirconium bisacetylacetonate, and zirconium ethylacetoacetate, or a similar zirconium compound. There are no restrictions with regard to amounts in which the aforementioned adhesion-imparting agents can be used; however, in general, it is recommended to use them in an amount of 0.01 to 10 parts by mass per 100 parts by mass of component (A).

Furthermore, in order to adjust the curing speed of the silicone rubber composition and to improve handleability and workability, the composition can be combined with 2-methyl-3-butyn-2-ol, 3,5-dimethyl-1-hexyn-3-ol; 2-phenyl-3-butyn-2-ol, or similar acetylene-type compounds; 3-methyl-3-penten-1-yne, 3,5-dimethyl-3-hexen-1-yne, or similar en yne compounds; 1,3,5,7-tetramethyl-1,3,5,7-tetravinylcyclotetrasiloxane, 1,3,5,7-tetramethyl-1,3,5,7-tetrahexenylcyclotetrasiloxane, benzotriazole, or similar azoles, phosphines, mercaptanes, hydrazines, or other curing inhibitors. There are no special restrictions with regard to amounts in which these curing inhibitors can be used, but is recommended to add them in an amount of 0.001 to 5 parts by mass per 100 parts by mass of component (A).

There are no special restriction with regard to a method that can be used for the preparation of the composition of the invention. The composition is prepared by mixing components (A) through (E), if necessary, with the addition of some arbitrary components. If component (F) is added, a base compound is first prepared by mixing components (A) and (F) with heating and then components (B) through (E) are added to the base compound. When other arbitrary compounds are used, they are added to-the base compound. If mixing with heating modifies these components, they can be combined with components (B) through (E). Furthermore, component (F) can be surface treated *in-situ* by adding the aforementioned organic silicon compounds to the base compound. The present adhesive composition can be prepared by using two-roll mills, kneaders, Roses® mixers, or similar mixers.

### Examples

The silicone rubber composition of the present invention will be further described in more detail with reference to Practical and Comparative Examples. In all Examples values of viscosity correspond to measurements at 25°C. The following methods were used for measuring characteristics of silicone rubber.

### [Physical Properties of Silicone Rubber]

A silicone rubber composition was prepared by mixing both parts of a two-liquid type silicone rubber composition. The composition was cured by leaving it in a static state for one day at 25°C, whereby it turned into a silicone rubber. Hardness (durometer hardness) of the obtained silicone rubber was measured by type A durometer in accordance with JIS K 6253-1997 (Hardness testing methods for rubber, vulcanized or thermoplastic). Furthermore, the aforementioned silicone rubber composition was left in a static state for one day at 25°C, whereby it turned into a silicone rubber in the form of dumbbell type specimens No. 7 with wide gripping portions for tensile test in accordance with JIS K 6251-1993 (Tensile testing methods for vulcanized rubber). The obtained specimens were used for measuring tensile strength and elongation of the rubber in accordance with aforementioned JIS K 6251-1993.

### [Adhesion to Silicone Rubber]

A silicone rubber composition was prepared by mixing both parts of a two-liquid type silicone rubber composition. Adhesion of the composition to silicone rubber was measured in accordance with JIS K 6854-3:1999 (Methods of Testing Adhesive Properties of Adhesive Agents: Part 3 - T-shaped peeling strength) in the following manner. First, a silicone rubber composition was prepared by mixing both parts of a two-liquid type silicone rubber composition. The obtained composition was applied in the form of a 50 mm-wide strip onto a Nylon substrate coated with a 30 g/m² silicone rubber so that the composition formed a 0.7 mm-thick layer on the rubber surface. The coated substrate was left intact for 1 day at 25°C for curing whereby a specimen was prepared. Adhesive strength to silicone rubber was determined by subjecting the obtained specimen to T-shaped peeling test at a speed of 200 mm/min.

### [Practical Example 1]

A uniform mixture was prepared by mixing 100 parts by mass of a dimethylpolysiloxane capped at both molecular terminals with dimethylvinylsiloxy groups and having viscosity of 40,000 mPa·s and 41 parts by mass of a fumed silica powder having a BET specific surface area of 200 m²/g. The obtained mixture was mixed again with 7 parts by mass of hexamethyldisilazane and 2.5 parts by mass of water in a Ross® mixer and then further heat mixed for 2 hours at 170°C under a reduced pressure to form a base compound.

61.1 parts by mass of the aforementioned base compound were combined and mixed with 40 parts by mass of a precipitated calcium carbonate powder (the product of Shiraishi Industries Co., Ltd., known under the trade name HAKUENKA CCR) having a 18 m²/g BET surface areas, 67.4 parts by mass of dimethylpolysiloxane capped at both molecular terminals with dimethylvinylsiloxy groups and having a viscosity of 40,000 mPa·s; a 1,3-divinyltetramethyldisiloxane solution of a platinum-1,3-divinyltetramethyldisiloxane complex (where metallic platinum contained in the catalyst is used in an amount of 30 parts by mass per 10⁶ parts by mass of dimethylpolysiloxane in the below-mentioned composition (I)}; and 2.0 parts by mass of a pigment paste compounded with 40 parts by mass of red iron oxide in 60 parts by mass of a dimethylpolysiloxane capped at both molecular terminals with dimethylvinylsiloxy groups and having a viscosity of 10,000 mPa·s. As a result, Composition (I) was prepared.

Furthermore, the aforementioned 61.1 parts by mass of the aforementioned base compound mixed with 40 parts by mass of a precipitated calcium carbonate powder (the product of Shiraishi Industries Co., Ltd., known under the trade name HAKUENKA CCR) having a 18 m²/g BET surface areas were combined and mixed for 2 hours at 170°C with 40.9 parts by mass of a dimethylpolysiloxane capped at both molecular terminals with dimethylvinylsiloxy groups and having a viscosity of 40,000 mPa·s and 3.0 parts by mass of a dimethylpolysiloxane capped at both molecular terminals with silanol groups and having a viscosity of 40 mPa·s. After cooling to room temperature, the mixture was further mixed with 25.5 parts by mass of a dimethylpolysiloxane capped at both molecular terminals with dimethylhydrogensiloxy groups and having a viscosity of 120 mPa·s {the mole ratio of silicon-bonded hydrogen atoms contained in this component to vinyl groups contained in the dimethylpolysiloxane of the composition prepared by mixing the aforementioned composition (1) with the below-mentioned composition (II) in a 1:1 mass ratio becomes equal to 0.64} and with 2.2 parts by mass of a copolymer of a methylhydrogensiloxane and a dimethylsiloxane capped at both molecular terminals with trimethylsiloxy groups, having a viscosity of 170 mPa·s, and having with an average of 7 silicon-bonded hydrogen atoms in one molecule {the mole ratio of silicon-bonded hydrogen atoms contained in this component to vinyl groups contained in the dimethylpolysiloxane of the composition prepared by mixing the aforementioned composition (1) with the below-mentioned composition (II) in a mass ratio of 1:1 becomes equal to 0.14}. As a result, Composition (II) was prepared.

A silicone rubber composition was obtained by mixing aforementioned composition (I) with aforementioned composition (II) in a mass ratio of 1:1. Physical characteristics and adhesive properties of silicone rubber obtained by curing the aforementioned silicone rubber composition were measured. Results of measurement are shown in Table 1. Furthermore, each of Compositions (I) and (II) was aged for 4 weeks at 50°C, and another silicone rubber composition was prepared by mixing the thermally aged compositions in a mass ratio of 1:1. Physical characteristics and adhesive properties of silicone rubber obtained by curing the last-mentioned silicone rubber composition were measured. Results of measurement are shown in Table 1.

### [Practical Example 2]

Composition (III) was prepared in the same manner as the composition (II) of Practical Example 1, except that 40 parts by mass of a quartz powder (CRYSTALITE 5X, a product of Tatsumori Co., Ltd.) were used instead of the precipitated calcium carbonate powder (the product of Shiraishi Industries Co., Ltd., known under the trade name HAKUENKA CCR) having a 18 m²/g BET surface areas
in the composition (II). A silicone rubber composition was prepared by mixing composition (I) of Practical Example 1 and aforementioned composition (III) in a mass ratio of 1:1. Physical characteristics and adhesive properties of silicone rubber obtained by curing the aforementioned silicone rubber composition were measured. Results of measurement are shown in Table 1. Furthermore, each of Compositions (I) and (III) was aged for 4 weeks at 50°C, and another silicone rubber composition was prepared by mixing the thermally aged compositions in a mass ratio of 1:1. Physical characteristics and adhesive properties of silicone rubber obtained by curing the last-mentioned silicone rubber composition were measured. Results of measurement are shown in Table 1.

### [Practical Example 3]

Composition (IV) was prepared in the same manner as the composition (II) of Practical Example 1, except that 40 parts by mass of an aluminum hydroxide powder (H-42M, a product of Showa Denko Co., Ltd.) were used instead of the precipitated calcium carbonate powder (the product of Shiraishi Industries Co., Ltd., known under the trade name HAKUENKA CCR) having a 18 m²/g BET surface areas in the composition (II). A silicone rubber composition was prepared by mixing composition (I) of Practical Example 1 and aforementioned composition (IV) in a mass ratio of 1:1. Physical characteristics and adhesive properties of silicone rubber obtained by curing the aforementioned silicone rubber composition were measured. Results of measurement are shown in Table 1: Furthermore, each of Compositions (I) and (IV) was aged for 4 weeks at 50°C, and another silicone rubber composition was prepared by mixing the thermally aged compositions in a mass ratio of 1:1. Physical characteristics and adhesive properties of silicone rubber obtained by curing the last-mentioned silicone rubber composition were measured. Results of measurement are shown in Table 1.

### [Comparative Example 1]

Composition (V) was prepared in the same manner as the composition (II) of Practical, Example 1, except that 3.0 parts by mass of the dimethylpolysiloxane capped at both molecular terminals with silanol groups and having a viscosity of 40 mPa·s was not contained in the composition (II). A silicone rubber composition was prepared by mixing composition (I) of Practical Example 1 and aforementioned composition (V) in a mass ratio of 1:1. Physical characteristics and adhesive properties of silicone rubber obtained by curing the aforementioned silicone rubber composition were measured. Results of measurement are shown in Table 1. Furthermore, each of Compositions (I) and (V) was aged for 4 weeks at 50°C, and another silicone rubber composition was prepared by mixing the thermally aged compositions in a mass ratio of 1:1. Physical characteristics and adhesive properties of silicone rubber obtained by curing the last-mentioned silicone rubber composition were measured. Results of measurement are shown in Table 1.

### [Comparative Example 2]

Composition (VI) was prepared in the same manner as the composition (III) of Practical Example 2, except that 3.0 parts by mass of the dimethylpolysiloxane capped at both molecular terminals with silanol groups and having a viscosity of 40 mPa·s was not contained in the composition (III). A silicone rubber composition was prepared by mixing composition (I) of Practical Example 1 and aforementioned composition (VI) in a mass ratio of 1:1. Physical characteristics and adhesive properties of silicone rubber obtained by curing the aforementioned-silicone rubber composition were measured. Results of measurement are shown in Table 1. Furthermore, each of Compositions (I) and (VI) was aged for 4 weeks at 50°C, and another silicone rubber composition was prepared by mixing the thermally aged compositions in a mass ratio of 1:1. Physical characteristics and adhesive properties of silicone rubber obtained by curing the last-mentioned silicone rubber composition were measured. Results of measurement are shown in Table 1.

### [Comparative Example 3]

Composition (VII) was prepared in the same manner as the composition (IV) of Practical Example 3, except that 3.0 parts by mass of the dimethylpolysiloxane capped at both molecular terminals with silanol groups and having a viscosity of 40 mPa·s was not contained in the composition (IV). A silicone rubber composition was prepared by mixing composition (I) of Practical Example 1 and aforementioned composition (VII) in a mass ratio of 1:1. Physical characteristics and adhesive properties of silicone rubber obtained by curing the aforementioned silicone rubber composition were measured. Results of measurement are shown in Table 1. Furthermore, each of Compositions (I) and (VII) was aged for 4 weeks at 50°C, and another silicone rubber composition was prepared by mixing the thermally aged compositions in a mass ratio of 1:1. Physical characteristics and adhesive properties of silicone rubber obtained by curing the last-mentioned silicone rubber composition were measured. Results of measurement are shown in Table 1.

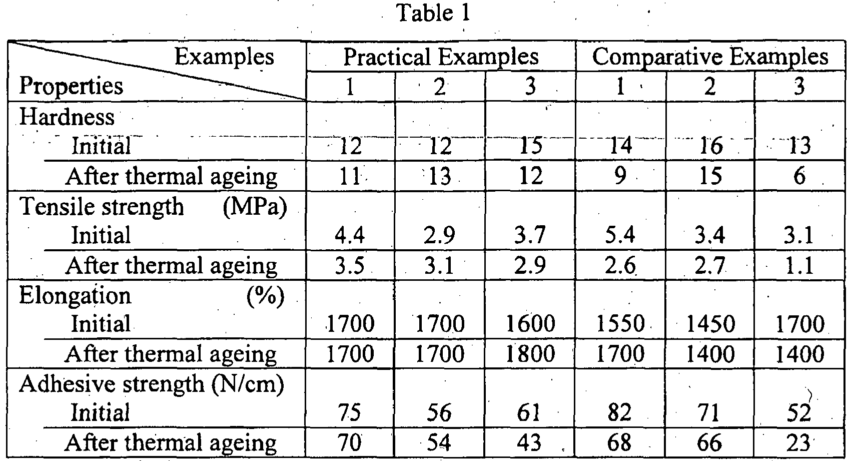

### Industrial Applicability

Since the silicone rubber composition of the present invention, which contains a calcium carbonate powder and is curable by a hydrosilylation reaction, can produce a silicone rubber with initially designed physical properties and adhesion to silicone rubber even after long storage, it is suitable for lamination with fabrics that contain silicone rubber or are coated with silicone rubber. For example, the composition can be used as an adhesive agent or a sealer between two mutually overlapped edges of an air bag to be joined by adhesion or sewing.

## Claims

1. A silicone rubber composition comprising:
(A) 100 parts by mass of a diorganopolysiloxane having with an average of at least two alkenyl groups in one molecule;
(B) an organopolysiloxane having with an average of at least two silicon-bonded hydrogen atoms {wherein the mole ratio of silicon-bonded hydrogen atoms of this component to alkenyl groups of component (A) is in the range of 0,01 to 20};
(C) 1 to 200 parts by mass of a precipated or light calcium carbonate powder surface-treated with a fatty acid or a resin acid;
(D) 0.01 to 20 parts by mass of a diorganopolysiloxane capped at both molecular terminals with silanol groups which are free of alkenyl groups and silicon-bonded hydrogen atoms; and
(E) a hydrosilylation reaction catalyst (used in the amount required for curing the present composition).

2. The silicone rubber composition of Claim 1 further comprising (F) a silica powder {used in an amount of 0.1 to 100 parts by mass per 100 parts by mass of component (A)}.

3. The silicone rubber composition of Claim 2, wherein component (F) is heat mixed with component (A).

## Patentansprüche

1. Silikongummi-Zusammensetzung, umfassend:
(A) 100 Masseteile eines Diorganopolysiloxans mit durchschnittlich mindestens zwei Alkenylgruppen in einem Molekül,
(B) ein Organopolysiloxan mit durchschnittlich mindestens zwei siliciumgebundenen Wasserstoffatomen {wobei das Molverhältnis von siliciumgebundenen Wasserstoffatomen dieses Bestandteils zu Alkenylgruppen von Bestandteil (A) im Bereich von 0,01 bis 20 liegt},
(C) 1 bis 200 Masseteile eines gefällten oder leichten, mit einer Fettsäure oder einer Harzsäure oberflächenbehandelten Calciumcarbonat-Pulvers,
(D) 0,01 bis 20 Masseteile eines Diorganopolysiloxans, das an beiden Molekülenden mit Silanolgruppen verkappt ist, die frei von Alkenylgruppen und siliciumgebundenen Wasserstoffatomen sind, und
(E) einen Katalysator für eine Hydrosilylierungsreaktion (verwendet in der zur Aushärtung der vorliegenden Zusammensetzung erforderlichen Menge).

2. Silikongummi-Zusammensetzung nach Anspruch 1, ferner umfassend (F) ein Kieselsäurepulver {verwendet in einer Menge von 0,1 bis 100 Masseteilen pro 100 Masseteilen von Bestandteil (A)}.

3. Silikongummi-Zusammensetzung nach Anspruch 2, wobei Bestandteil (F) mit Bestandteil (A) unter Erhitzen vermischt wird.

## Revendications

1. Composition de caoutchouc de silicone comprenant :
(A) 100 parties en masse d'un diorganopolysiloxane ayant une moyenne d'au moins deux groupes alcényle dans une molécule;
(B) un organopolysiloxane ayant une moyenne d'au moins deux atomes d'hydrogène liés à du silicium {dans laquelle le rapport molaire d'atomes d'hydrogène liés à du silicium de ce composant sur les groupes alcényle du composant (A) est dans l'intervalle de 0,01 à 20} ;
(C) 1 à 200 parties en masse d'une poudre de carbonate de calcium précipité ou léger traité en surface avec un acide gras ou un acide résinique ;
(D) 0,01 à 20 parties en masse d'un diorganopolysiloxane coiffé au niveau de l'une et l'autre des terminaisons moléculaires avec des groupes silanol qui sont exempts de groupes alcényle et d'atomes d'hydrogène liés à du silicium ; et
(E) un catalyseur de réaction d'hydrosilylation (utilisé dans la quantité requise pour durcir la présente composition).

2. Composition de caoutchouc de silicone selon la revendication 1, comprenant en outre (F) une poudre de silice utilisée en une quantité de 0,1 à 100 parties en masse par 100 parties en masse de composant (A)}.

3. Composition de caoutchouc de silicone selon la revendication 2, dans laquelle le composant (F) est mélangé à chaud au composant (A).
